# EUROPÄISCHE PATENTSCHRIFT

(11) **EP 3 433 201 B1**
(45) Veröffentlichungstag und Bekanntmachung des Hinweises auf die Patenterteilung: **05.11.2025**
(21) Anmeldenummer: 17713580.3
(22) Anmeldetag: 23.03.2017
(51) Int. Cl.: B66C 15/06, B66C 13/46, E02F 9/20, G02B 6/34

(54) **VERFAHREN ZUR ÜBERWACHUNG EINER ARBEITSMASCHINE**
METHOD FOR MONITORING A WORKING MACHINE
PROCÉDÉ DE SURVEILLANCE D'UN ENGIN DE TRAVAIL

(30) Priorität: 23.03.2016 DE 102016003566
(43) Veröffentlichungstag der Anmeldung: 30.01.2019
(73) Patentinhaber: Liebherr-Werk Biberach GmbH, 88400 Biberach an der Riss (DE)
(72) Erfinder: KRUPINSKI, Jacek, 54292 Trier (DE)
(74) Vertreter: Laufhütte, Dieter
(86) Internationale Anmeldenummer: PCT/EP2017/000364
(87) Internationale Veröffentlichungsnummer: WO 2017/162336

(56) Entgegenhaltungen:
- WO-A1-2005/098515
- CN-A- 102 826 452
- US-A1- 2002 175 824
- US-A1- 2004 148 083
- US-A1- 2008 061 959
- US-A1- 2010 044 332

## Beschreibung

Die Erfindung betrifft ein Verfahren zur Überwachung einer Arbeitsmaschine, insbesondere eines Kranes, die aus zwei oder mehreren Einzelelementen für den Arbeitseinsatz gerüstet wird.

Gewisse Arbeitsmaschinen werden aus einer Vielzahl von Maschinenelementen gerüstet, um die Maschine anwendungsabhängig auf den bevorstehenden Einsatzzweck anzupassen. Als Beispiel dienen Krane, insbesondere Gitterkrane, die aus einer beliebigen Anzahl von Gitterelementen flexibel zusammensetzbar sind, wodurch sich Turmhöhe, Auslegerlänge und Auslegerart besonders einfach auf den jeweiligen Anwendungszweck abstimmen lassen. Als Elemente können neben Gitterstücken auch andere Maschinenelemente verstanden werden, die variabel und unmittelbar vor jedem Kraneinsatz gerüstet werden. Als weiteres nicht abschließendes Beispiel werden Ballastelemente genannt, deren Anzahl und Gesamtgewicht in Abhängigkeit der aufzunehmenden Last bzw. der Krangeometrie bestimmt werden.

In der Regel halten Betreiber derartiger Arbeitsmaschinen in ihrem Flottenpark eine Vielzahl von Elementen bereit, um die Maschinen kurzfristig und flexibel je nach verlangtem Einsatzzwecke zusammenzustellen. Die verlangte Zusammenstellung der jeweiligen Arbeitsmaschine wird an den Einsatzort transportiert und Vorort montiert. Die Bereithaltung großer Zahlen an rüstbaren Elementen führt dazu, dass diese über die Jahre unterschiedliche Einsatzzeiten aufweisen, da normalerweise nicht alle bereitgehaltenen Elemente einheitlich zum Einsatz kommen. Darüber hinaus bedeuten unterschiedliche Einsatzzwecke abweichende Belastungen für die einzelnen Elemente, beispielsweise werden Gitterelemente für den Kranturm bzw. Ausleger nicht zwingend für jeden Arbeitseinsatz an der gleichen Position verbaut. Es kommt folglich zu unterschiedlichen Belastungen der verwendeten Elemente. Der Verschleiß und damit die zukünftige Tragfähigkeit der Elemente ist daher für alle Elemente individuell und nur schwer überschaubar. Werden die Einsatzzeiten und Belastungen über die Lebensdauer der einzelnen Elemente nicht händisch exakt dokumentiert, kann keine exakte Beurteilung des jeweiligen Elementes bezüglich dessen Lebensdauer erfolgen. Die Elemente müssen aus Sicherheitsgründen daher frühzeitig ausgetauscht werden.

Ein weiterer Aspekt beim Rüsten einer Arbeitsmaschine, insbesondere eines Krans, besteht darin, dass die Elemente der Arbeitsmaschinen nach den Vorgaben in der BAL zusammengebaut werden und anschließend die passende Lastkurve manuell bestimmt und in der Kransteuerung eingestellt wird. Diese Vorgehensweise ist jedoch zeitaufwändig und fehleranfällig, da aufgrund der Einbindung des Kranführers Verwechslungen und Fehleingaben nicht ausgeschlossen werden können.

Ein Verfahren gemäß dem Oberbegriff des Anspruchs 1 ist in US2010/044332A1 offenbart.

Die vorliegende Erfindung beschäftigt sich daher mit der Aufgabe, ein geeignetes Verfahren aufzuzeigen, das eine automatisierte Überwachung der Arbeitsmaschine, d.h. der gerüsteten Elemente ermöglicht.

Gelöst wird diese Aufgabe durch das Verfahren gemäß den Merkmalen des Anspruchs 1. Vorteilhafte Ausgestaltungen des Verfahrens sind Gegenstand der abhängigen Unteransprüche.

Erfindungsgemäß wird ein Verfahren zur Überwachung einer Arbeitsmaschine, insbesondere eines Krans, besonders bevorzugt eines Turmkrans, Mobilkrans oder Raupenkrans, vorgeschlagen, die aus zwei oder mehreren Einzelelementen für den Arbeitseinsatz gerüstet wird. Bei den jeweiligen Einzelelementen handelt es sich beispielsweise um Gitterelemente zum Aufbau eines Kranauslegers, Kranturms bzw. um etwaige andere Komponenten der Arbeitsmaschine, wie Ballastelemente, Abspannteile, Abstützelemente, Anbaugeräte etc., die je nach Maschineneinsatz bedarfsweise montiert werden können.

Ergänzend ist ein Überwachungsmittel an der Arbeitsmaschine vorgesehen, das ein oder mehrere gerüstete Elemente eindeutig identifiziert und deren Einsatzzeit bestimmt. Die Einsatzzeit betrifft vorzugsweise die Zeit, über die das einzelne Element im gerüsteten Zustand an der Arbeitsmaschine verbleibt. Denkbar ist zudem eine Aufzeichnung der tatsächlichen Betriebsdauer an der Arbeitsmaschine unter Lasteinfluss.

Die Identifizierung der gerüsteten Elemente und die anschließende Zuordnung der individuellen Einsatzzeit für jedes gerüstete Element bieten zahlreiche Möglichkeiten für die Überwachung der Arbeitsmaschine bzw. einzelner Elemente. Weiter erfindungsgemäß wird die bestimmte Einsatzzeit wenigstens eines Elements zusammen mit dessen Identifikationsinformation an ein Speichermittel zur Erstellung einer Einsatzhistorie des Elementes übermittelt. Die Einsatzhistorie beinhaltet nicht nur die kürzlich ermittelte Einsatzzeit, sondern zudem Einsatzzeiten aus vorangegangenen Maschineneinsätzen, entweder mit selbiger Arbeitsmaschine oder einer anderen Arbeitsmaschine.

Dadurch besteht die Möglichkeit, dass innerhalb des Speichermittels sämtliche Einsatzzeiten des Rüstelementes über dessen Lebensdauer vollständig dokumentiert vorliegen. Der gesamte Vorgang ist vollautomatisiert und die Informationen liegen innerhalb des Speichermittels für die Nachbearbeitung und Analyse zum Abruf bereit. Idealerweise sind sämtliche oder zumindest ein Großteil der rüstbaren Elemente identifizierbar, so dass dem Maschinenbetreiber umfassende Informationen über seine Elemente bereitgestellt werden können. Dies erleichtert das gesamte Flottenmanagement seines Fuhrparks erheblich. Idealerweise erlaubt diese Voraussetzung eine prognostische Untersuchung aller verfügbaren Elemente auf deren mögliche Haltbarkeit.

Das verwendete Speichermittel liegt entweder innerhalb einer zentralen Verwaltungseinheit, die kommunikativ mit ein oder mehreren Überwachungsmitteln unterschiedlicher Arbeitsmaschinen in Verbindung steht. Dies ist insbesondere dann zweckmäßig, wenn die Arbeitsmaschine und die zentrale Verwaltungseinheit in der Obhut eines Flottenbetreibers liegen. Dadurch lassen sich die Elemente sämtlicher Arbeitsmaschinenzentral verwalten. Die zentrale Verwaltungseinheit könnte selbstverständlich auch herstellerseitig angeboten werden.

Alternativ sind separate Speichermittel in jedes Element selbst integriert, sodass jedes Rüstelement selbst seine erstellte Einsatzhistorie verwaltet und für den externen Abruf bereithält. Auch spricht nichts gegen eine Integration des Speichermittels in das Überwachungsmittel.

Das Überwachungsmittel ist Bestandteil der Arbeitsmaschinensteuerung. Für die Analyse der Rüstelemente ist es zweckmäßig neben der Einsatzzeit weitere Informationen zur Verfügung zu stellen. In diesem Zusammenhang ist beispielsweise die exakte Einbauposition des Rüstelementes an der Arbeitsmaschine während des Maschinenbetriebes von zentraler Bedeutung. Deren Berücksichtigung lässt einen genauen Rückschluss auf die im Maschinenbetrieb auftretende Belastung des Elementes zu. Bevorzugt bestimmt das Überwachungsmittel die genaue Einbauposition des Rüstelementes an der Arbeitsmaschine für jeden Kranbetrieb. Diese Positionsinformation wird von dem Überwachungsmittel zusammen mit der Einsatzzeit und der Identifikationsinformation an das Speichermittel übertragen.

Erfindungsgemäß werden zudem ein oder mehrere Lastkollektive für zumindest einen Teil der gerüsteten Elemente durch das Überwachungsmittel erfasst und an das Speichermittel übertragen. Lastkollektive haben einen erheblichen Einfluss auf die tatsächliche Belastung der gerüsteten Elemente und bestimmen in erheblichem Ausmaß die Haltbarkeit dieser Elemente.

Für die weitergehende Verarbeitung der im Speichermittel hinterlegten Daten kann eine Auswerteeinheit vorgesehen sein. Bevorzugt nimmt die Auswerteeinheit eine belastungsbedingte Zustandsanalyse der einzelnen Rüstelemente vor, um deren zukünftige Belastbarkeit/Tragfähigkeit zu beurteilen. Dem Maschinenführer können dadurch tragbare Informationen zu den einzelnen Elementen an die Hand gegeben werden. Die Informationen lassen einen Rückschluss zu, ob einzelne Elemente noch für weitere geplante Einsätze der Arbeitsmaschine tauglich sind, ohne dass ein Sicherheitsrisiko während des Maschinenbetriebs eingegangen wird. Andernfalls kann dem Maschinenbetreiber ein Austausch der in Rede stehenden Elemente nahegelegt werden.

Insbesondere ist es zweckmäßig, wenn innerhalb der Auswerteeinheit Informationen vorliegen, die die Belastung eines gerüsteten Elementes pro Betriebseinsatz bzw. die Gesamtbelastung über die gesamte Einsatzzeit beschreiben. Insbesondere kann die Belastung anhand der erfassten Einbauposition an der Arbeitsmaschine sowie weiterer den Arbeitsbetrieb beschreibenden Informationen bestimmt werden. Die tatsächliche Belastung kann entweder durch das Überwachungsmittel bestimmt und der Auswerteeinheit mitgeteilt werden oder alternativ erst innerhalb der Auswerteeinheit selbst berechnet werden.

Wesentliche Faktoren für die Belastungsanalyse sind die Gesamtbelastung der Maschine, d.h. beispielsweise durch eine angehängte Last, sowie die vollständige Maschinenkonfiguration und auszuführenden Maschinenbewegungen. Auch können äußere Einflüsse eine Rolle spielen. Die Belastung für einzelne Elemente kann entweder berechnet oder anhand einer hinterlegten Belastungstabelle abgelesen werden.

Neben der Zustandsanalyse der Elemente kann innerhalb der Auswerteeinheit alternativ oder ergänzend ebenfalls eine Beurteilung der Wirtschaftlichkeit ein oder mehrerer Elemente erfolgen. Auch dazu werden die im Speichermittel hinterlegten Daten herangezogen, wobei insbesondere anhand der hinterlegten Einsatzzeit bestimmt wird, ob das entsprechende Rüstelement ausreichend genutzt wird. Die Wirtschaftlichkeit lässt sich weiterhin in Kombination mit hinterlegten Informationen bezüglich der erzielten Erträge pro einzelnem Rüstelement bestimmen. Daraus ist beispielsweise ersichtlich, ob der Einsatz des jeweiligen Elementes über die Einsatzdauer tatsächlich rentabel ist.

Denkbar ist es ebenfalls, für diese Beurteilung anfallende Kosten für das Element heranzuziehen, beispielsweise Kosten für eine notwendigen Austausch und/oder Inbetriebnahme und/oder Wartung des Elementes. Anhand dieser Analyse kann der Maschinenbetreiber feststellen, ob einzelne Rüstelemente für ihn aus ökonomischer Sicht rentabel sind oder ob diese möglicherweise aus Sicherheitsgründen zu ersetzen sind.

Ergänzend oder alternativ kann die Auswerteeinheit ebenfalls dazu eingesetzt werden, um die aktuell gerüstete Konfiguration der Arbeitsmaschine auf deren Zulässigkeit zu überprüfen, insbesondere dahingehend, ob diese vorgeschriebene Sicherheitsbestimmung erfüllt. In diesem Zusammenhang wird beispielsweise überprüft, ob sämtliche gerüstete Elemente durch das Überwachungsmittel unmittelbar und eindeutig identifizierbar sind. Sind einzelne rüstbare Elemente beispielsweise nicht identifizierbar, so könnte dies als Hinweis auf ein Plagiat interpretiert werden.

Ferner kann weitergehend überprüft und festgestellt werden, ob die identifizierten gerüsteten Elemente in ihrer jeweiligen Einbauposition zulässig sind. Im Allgemeinen besteht die Möglichkeit, den konkreten Rüstzustand der Arbeitsmaschine exakt und automatisiert zu ermitteln. Betriebsrelevante rüstungsabhängige Steuerdaten, die von der Maschinensteuerung für den Maschinenbetrieb benötigt werden, können basierend auf diesen Informationen automatisiert bereitgestellt werden, so zum Beispiel eine erforderliche Traglasttabelle für den Betrieb der Arbeitsmaschine. Grundsätzlich lassen sich beliebige rüstabhängige Daten in Abhängigkeit der von den Überwachungsmitteln bereitgestellten Informationen der Arbeitsmaschinensteuerung zur Verfügung stellen.

Für den Fall, dass durch das Überwachungsmittel ein nicht identifizierbares Element erkannt wird, können unterschiedliche Maßnahmen ergriffen werden, beispielsweise kann dieses Ereignis innerhalb eines Speichermittels hinterlegt und für den späteren Abruf bereitgestellt werden. Denkbar ist ebenfalls die Generation eines entsprechenden Warnhinweises an den Maschinenführer. Idealerweise wird verlangt das Überwachungsmittel bzw. die Maschinensteuerung in diesem Fall eine manuelle Freischaltung des Betriebes durch den Maschinenführer, so dass dessen Kenntnisnahme sichergestellt ist.

Die Identifikation der rüstbaren Elemente kann beispielsweise anhand kodierter Informationen erfolgen, die zweckmäßigerweise direkt und unmittelbar an den einzelnen Elementen vorliegen. Die Übertragung entsprechender Informationen kann beispielsweise mittels Lichtleiter erfolgen, die einen Übertragungsweg von den einzelnen Elementen zum Überwachungsmittel bereitstellen. Ein Informationsaustausch per Lichtleiter kann ebenfalls zwischen einzelnen Elementen vorgesehen sein, so dass die Überlieferung der Information an das Überwachungsmittel per Multihop-Übertragung erfolgt.

Denkbar ist es in diesem Zusammenhang, dass Lichtleiter mit prismatischer Abzweigung pro einzelnem rüstbaren Element eingesetzt werden. Die Identifikationsinformation wird im Überwachungsmittel gesammelt und gegebenenfalls über eine weitere Kommunikationsverbindung an eine zentrale Auswerteeinheit weitergeleitet. Dieser Übertragungsweg kann kabelgebunden oder auch funkbasiert erfolgen. Denkbar sind sämtliche bekannte Übertragungstechnologien.

Alternativ kann die Übermittlung der Identifikationsinformationen von den rüstbaren Elementen zum Überwachungsmittel ebenfalls funkbasiert erfolgen, beispielsweise mittels berührungsloser Energieübertragung.

Die vorliegende Erfindung betrifft zudem eine Arbeitsmaschine, insbesondere einen Kran, besonders bevorzugt einen Turmkran, Mobilkran oder Raupenkran, mit einem Überwachungsmittel und ein oder mehreren identifizierbaren Rüstelementen. Die Arbeitsmaschine ist dementsprechend mit entsprechenden Mitteln zur Durchführung des Verfahrens gemäß der vorliegenden Erfindung geeignet ausgestattet. Die Vorteile und Eigenschaften der Arbeitsmaschine entsprechen demnach den bereits erläuterten Eigenschaften des erfindungsgemäßen Verfahrens, weshalb an dieser Stelle auf eine wiederholende Beschreibung verzichtet wird.

Zur Informationsübertragung der kodierten Identifizierungsinformationen von den gerüsteten Elementen an das Überwachungsmittel können beispielsweise ein oder mehrere Lichtleiter installiert sein, die vorzugsweise an den einzelnen Elementen befestigt sind. Ein Informationsaustausch per Lichtleiter kann ebenfalls zwischen einzelnen Elementen vorgesehen sein, so dass die Überlieferung der Information an das Überwachungsmittel per Multihop-Übertragung erfolgt. So kann beispielsweise die kodierte Identifikationsinformation eines Elementes mittelbar über mehrere dazwischenliegende rüstbare Elemente an das Überwachungsmittel übertragen werden.

Oftmals sind einzelne Elemente hintereinander montiert, beispielsweise beim Aufbau eines Kranturms oder Auslegers aus mehreren Gitterstücken. Die Lichtleiter einzelner Elemente sind dabei derart befestigt, dass durch die Montage der Elemente ein durchgehender Übertragungsweg des Lichtleiters zusammengefügt wird. Die Lichtleiter weisen dazu bevorzugt geeignete Koppelmittel auf, die lösbare Verbindungen der Lichtleiter unterschiedlicher Elemente zulassen.

Denkbar ist es in diesem Zusammenhang, dass Lichtleiter mit prismatischer Abzweigung pro einzelnem rüstbaren Element eingesetzt werden, wobei die prismatische Abzweigung die kodierte Information abbildet.

Alternativ kann ein berührungsloses Funkübertragungssystem zwischen Überwachungsmittel und gerüsteten Elementen vorgesehen sein. Ein derartiges Funkübertragungssystem basiert beispielsweise auf Grundlage eines RFID-Systems oder eines LWID-Systems (RuBee) oder eines vergleichbaren Systems. Denkbar ist ebenfalls der Einsatz von WLAN- bzw. Bluetooth-basierten Übertragungssystemen. Vorzugsweise wird durch das Überwachungsmittel und den rüstbaren Elementen ein Ad-hoc-Netzwerk aufgebaut, sodass geringe Übertragungsstrecken zwischen einzelnen Elementen bzw. den Elementen und dem Überwachungsmittel ausreichend sind.

Zuletzt umfasst die Erfindung ein System bestehend aus einer zentralen Verwaltungseinheit sowie wenigstens einer Arbeitsmaschine gemäß der vorliegenden Erfindung geeignet zur Durchführung des erfindungsgemäßen Verfahrens.

Weitere Vorteile und Eigenschaften der Erfindung sollen im Folgenden anhand eines in den Zeichnungen dargestellten Ausführungsbeispiels näher erläutert werden.

Es zeigen:
- Figur 1:: eine skizzierte Darstellung des erfindungsgemäßen Turmkranes für die Durchführung des erfindungsgemäßen Verfahrens,
- Figur 2:: der Kran gemäß Figur 1 unter Verwendung eines Lichtleitersystems für die Übertragung von kodierten Identifikationsinformationen und
- Figur 3:: der Kran gemäß Figur 1 mit berührungsloser Energieübertragung für die Übermittlung kodierter Identifikationsinformationen.

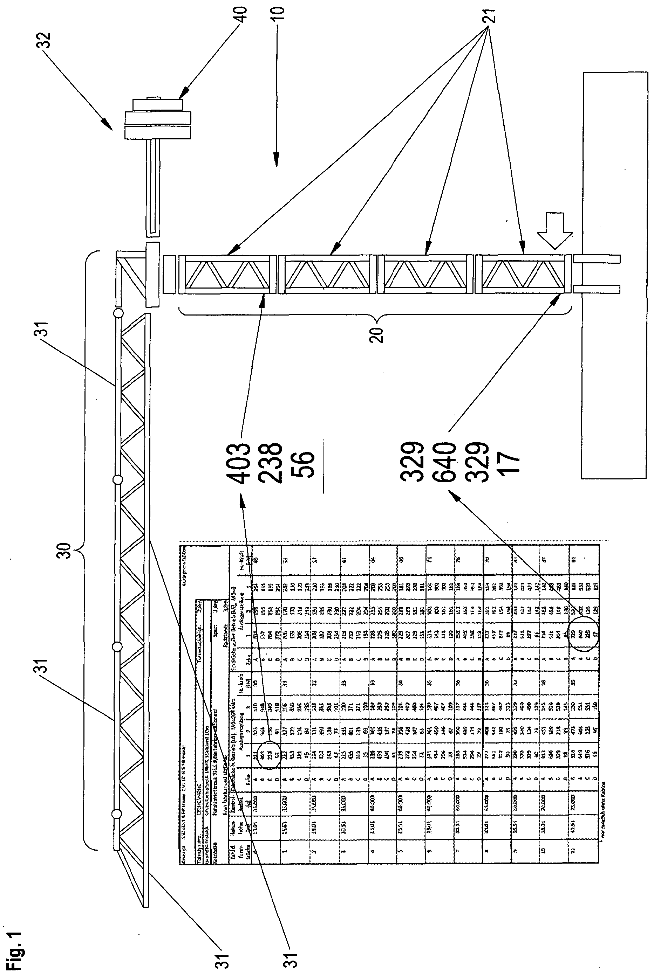

Figur 1 zeigt eine skizzierte Darstellung des erfindungsgemäßen Turmkrans 10, dessen Kranturm 20 in üblicherweise aus einzelnen Gitterelementen 21 zusammengesetzt ist. Am Turmkopf 22 befindet sich der Ausleger 30 mit Gegenausleger 32, die über die Drehbühne 25 drehbar am Turmkopf 22 befestigt sind. Auch der Ausleger 30 besteht aus einzelnen Gitterstücken 31. Am Gegenausleger 32 wird je nach Auslegerlänge und Lastaufnahme die gewünschte Anzahl an Ballastelementen 40 eingehängt. In der Realität besteht der Turmkran 10 aus einer Vielzahl an weiteren Rüstelementen, die ebenfalls in die erfindungsgemäße Überwachung einbezogen werden können. Der Einfachheit halber wird die Erfindung nachfolgend anhand der Gitterelemente 21, 31 erläutert, soll jedoch keineswegs nur auf diese eingeschränkt verstanden werden.

Die Gitterstücke 21, 31 des Kranes 10 sind mit einem Informationssystem ausgerüstet. Dieses Informationssystem soll kaskadenartig Informationen über die montierten Gitterstücke 21, 31 an die zentrale Kransteuerung übertragen. Um die montierten Gitterstücke 21, 31 eindeutig identifizieren zu können, umfassen diese jeweils eine individuelle kodierte Identifizierungsinformation 50, 51, die am Gitterstück 21, 31 selbst vorliegt. Diese Information lässt eine eindeutige Identifizierung der einzelnen Rüstelemente 21, 31 zu. Zudem lässt sich durch den Datenaustausch mit zwischen Kransteuerung und Rüstelementen 21, 31 deren konkrete Einbauposition am Kann 10 feststellen.

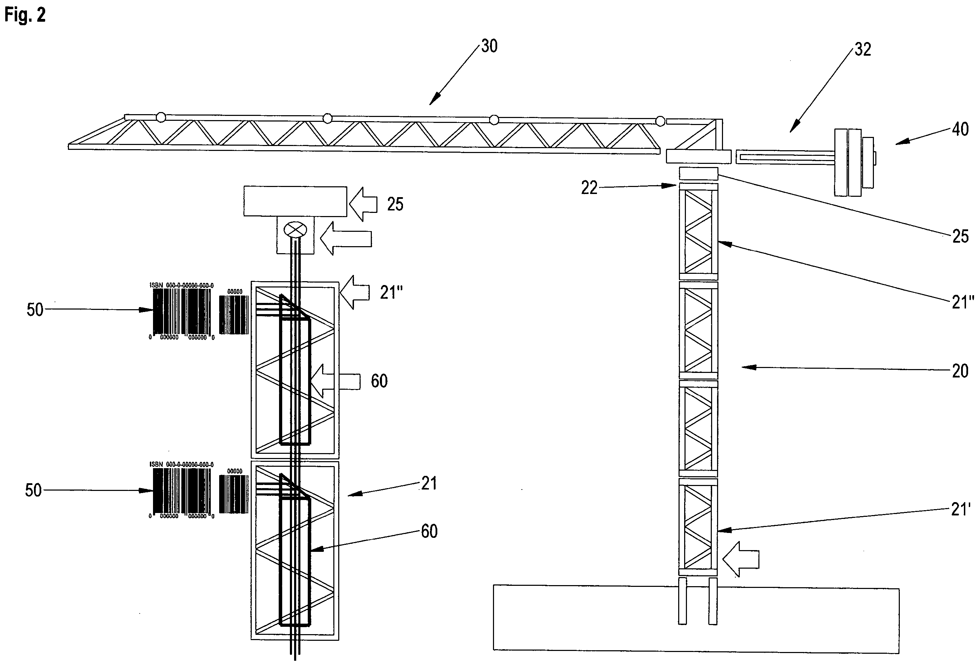

Die Übermittlung der kodierten Identifikationsinformationen 50 wird im Ausführungsbeispiel gemäß Figur 2 per Lichtleiter 60 bewerkstelligt. Einzelne Lichtleiter der Gitterstücke 21, 31 sind dabei derart angeordnet, so dass diese bei der Turm- oder Auslegermontage einen durchgehenden Übertragungsweg zur Sende- und Empfangseinheit 70 der Kransteuerung bilden. Gegebenenfalls können für Ausleger 30 und Kranturm 20 getrennte Lichtkreise eingesetzt werden.

Für jedes Gitterstück 21, 31 existieren charakteristische prismatische Abzweigungen, die für jedes Gitterstück 21, 31 die individuelle Identifikationsinformation 50 bilden. Diese Abzweigung beeinflusst somit die Lichtsignale, die von der Kransteuerung mittels der Sende- und Empfangseinheit 70 über die Lichtleiterwege 60 versendet werden, sodass erkannt werden kann, welche Gitterstücke 21, 31 an die Lichtleiter 60 angebunden sind und an welcher Position diese innerhalb des Kranturms 20 bzw. Auslegers 30 vorliegen.

Innerhalb der Kransteuerung werden diese empfangenen Informationen weitere Informationen hinzugefügt, die unter anderem die Einsatzzeit der Gitterstücke 21, 31 am Kran 10, d.h. die Betriebszeit und Außerbetriebszeit des Kranes 10 umfassen. Ergänzend werden diese Information noch um Informationen über Lastkollektive erweitert, die während des Kranbetriebs am jeweiligen Gitterstück 21, 31 vorlagen.

Dieses gebündelte Datenpakete, d.h. die Identifikationsinformation sowie die weitergehenden Informationen bezüglich der Einsatzzeit, der Lastkollektive sowie Einbauposition, werden von der Kransteuerung über das Kommunikationsmodul 70 an eine zentrale, nicht dargestellte Datenbank für die nachfolgende Auswertung weitergereicht. Die Übertragung kann funkbasiert oder drahtgebunden erfolgen. Die Datenbank kann innerhalb einer zentralen Verwaltungseinheit realisiert sein, die auf Herstellerseite oder auch beim Kraneigentümer selbst installiert ist. Neben der Datenbank ist eine Auswerteeinheit vorgesehen, die aus den übermittelten Daten eine genaue Einsatz- und Belastungshistorie für jedes einzelne Gitterstück 21, 31 des Kranes 10 erstellt.

Da jedes Gitterstück 21, 31 im Einsatz unterschiedlichen Belastungen unterliegt, bspw. wird das Turmelement 21' in der Nähe des Turmfußes deutlich stärker belastet als das Turmelement 21" in unmittelbarer Nähe zur Turmspitze, ist es wichtig, dass die Einsatzzeiten und Belastungen für jedes einzelne Element 21, 31 getrennt und hinreichend genau dokumentiert werden, da ansonsten keine zuverlässige Aussage über die zukünftige Haltbarkeit/Tragfähigkeit der Gitterstücke 21, 31 getroffen werden kann und die Notwendigkeit eines Ersatzes unter Umständen nicht rechtzeitig erkannt wird. Verfügt der Vermieter über viele Elemente 21, 31 gleicher Bauart, so kann es passieren, dass ein Element 21 immer eingesetzt wird, während weitere Elemente 21 seltener oder niemals zum Einsatz kommen.

Durch das erfindungsgemäße Verfahren kann nun sehr präzise und automatisiert ein Urteil über die technische Tauglichkeit einzelner Gitterelemente 21, 31 über deren Lebenszeit angestellt werden.

Optional besteht die Möglichkeit, die bestehende Kranflotte beim Eigentümer kommerziell auszuwerten. Durch Vergleich der Einsatzzeit pro Gitterstück 21, 31 und des mit diesem erzielten Gewinns kann zu jedem einzelnen Element 21, 31 (Systemelement, Turmelement) seine Wirtschaftlichkeit gerechnet werden. Der Eigentümer wird bei seiner Entscheidung über mögliche Investitionen oder eines Abverkaufs unterstützt.

Darüber hinaus besteht die Möglichkeit, auf Grundlage der übermittelten Daten die tatsächliche Konfiguration des Kranes 10 zu erfassen und nachfolgend zu bestätigen. Insbesondere kann anhand der Informationen die konkrete Turm- oder Auslegerzusammenstellung, der Gegenausleger und die Gegenballastierung automatisch ermittelt werden und die dazu passende Lastkurve berechnet bzw. bereitgestellt werden. Diese automatisierte Vorgehensweise vermeidet etwaige Fehlbedienung aufgrund falscher Eingaben des Kranführers.

Zudem wird durch das erfindungsgemäße Verfahren der Einsatz von Plagiaten für einzelne Elemente 21, 31 erschwert. Befinden sich am Kran 10 beispielsweise nicht identifizierbare Elemente 21, 31, wird dieses Ereignis automatisch erfasst und aufgezeichnet und die Freigabe für den Betrieb muss manuell durch den Kranführer bestätigt werden. Dadurch wird der Kranbetreiber automatisch in Kenntnis über nicht identifizierbare Elemente des Kranes 10 gesetzt.

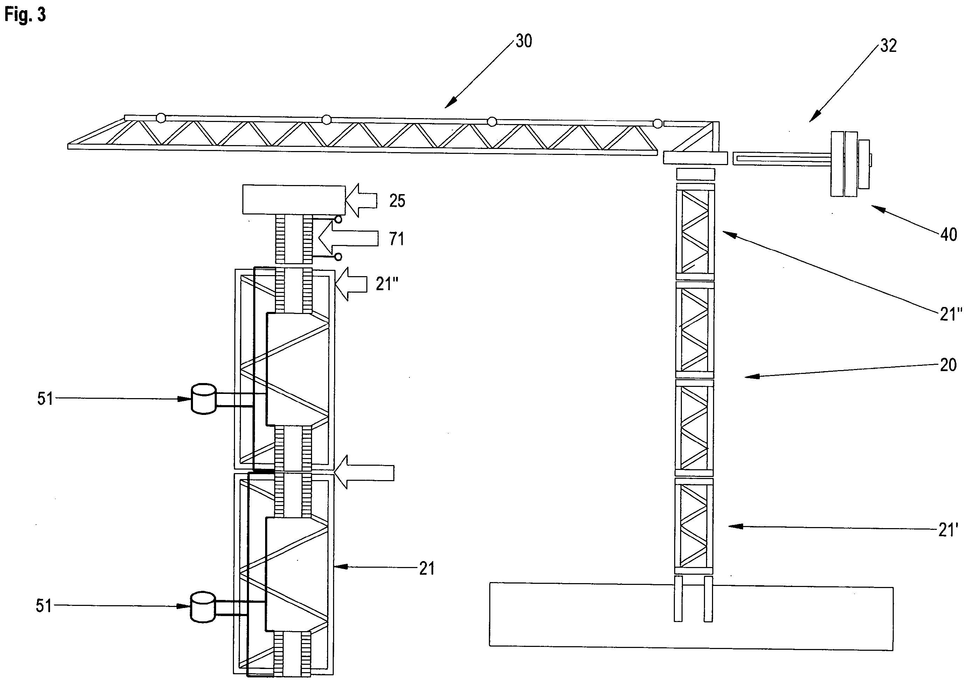

Eine alternative Möglichkeit zur Kommunikation mittels Lichtleiter besteht in der Verwendung einer berührungslosen Energieübertragung zwischen den einzelnen Rüstelementen 21, 31, wie dies schematisch anhand der Figur 3 verdeutlicht ist.

Zwischen den einzelnen Gitterelementen 21, 31 erfolgt eine berührungslose Funkübertragung der kodierten Identifikationsinformationen 51, die für jedes Gitterelement 21, 31 in einer separaten Speichereinheit 51 des betrachteten Gitterelementes 21, 31 abgelegt ist.

Da die Gitterstücke 21, 31 auf diesem Weg auch untereinander kommunizieren können, kann ein Informationsaustausch des untersten Gitterelementes 21' mit dem weitesten Übertragungsweg zur Sende- und Empfangseinheit 71 auch per Multihop mit Hilfe der dazwischen liegenden Gitterelemente 21, 21" erfolgen. Es wird folglich durch die Gitterelemente 21, 31 und die Sende- und Empfangseinheit 71 ein Ad-hoc-Netzwerk aufgebaut.

Denkbare berührungslose Energieübertragungssysteme können beispielsweise auf der bekannten RFID-Technologie basieren. Denkbar sind ebenfalls WLAN bzw. Bluetooth basierte Systeme sowie etwaige andere geeignete funkbasierte Übertragungssysteme.

## Patentansprüche

1. Verfahren zur Überwachung mindestens einer Arbeitsmaschine, insbesondere eines Krans (10), die aus zwei oder mehreren Einzelelementen für den Arbeitseinsatz gerüstet wird, wobei mindestens ein Überwachungsmittel einer Arbeitsmaschine mehrere gerüstete Elemente eindeutig identifiziert und deren Einsatzzeit bestimmt, wobei die bestimmten Einsatzzeiten mehrerer Elemente zusammen mit Identifikationsinformationen (50, 51) an mindestens ein Speichermittel zur Erstellung von Einsatzhistorien der Elemente übermittelt werden,
**dadurch gekennzeichnet,**
- **dass** während des Maschineneinsatzes Lastkollektive für zumindest einen Teil der gerüsteten Elemente durch das mindestens eine Überwachungsmittel ermittelt und an das mindestens eine Speichermittel übertragen werden,
- **dass** das mindestens eine Überwachungsmittel Bestandteil einer Arbeitsmaschinensteuerung ist und
- **dass** ein Speichermittel innerhalb einer zentralen Verwaltungseinheit liegt, die mit einem oder mehreren Überwachungsmitteln unterschiedlicher Arbeitsmaschinen in kommunikativer Verbindung steht oder in Verbindung bringbar ist, und/oder dass Speichermittel an den gerüsteten Elementen selbst angebracht sind.

2. Verfahren nach Anspruch 1, **dadurch gekennzeichnet, dass** neben der Einsatzzeit die Einbauposition des Elementes an der Arbeitsmaschine während des Maschineneinsatzes durch das Überwachungsmittel bestimmt und an das Speichermittel übertragen wird.

3. Verfahren nach einem der vorhergehenden Ansprüche, **dadurch gekennzeichnet, dass** eine Auswerteeinheit anhand der im Speichermittel hinterlegten Daten eine belastungsbedingte Zustandsanalyse der Elemente vornimmt um deren zukünftige Belastbarkeit/Tragfähigkeit zu beurteilen, wobei die Auswerteeinheit und/oder das Überwachungsmittel insbesondere anhand einer tabellarische Information die genaue Belastung eines gerüsteten Elementes pro Betriebseinsatz entnimmt, idealerweise anhand der erfassten Einbaupositionsinformation sowie weiterer den Arbeitsbetrieb beschreibenden Informationen.

4. Verfahren nach einem der vorhergehenden Ansprüche, **dadurch gekennzeichnet, dass** eine Auswerteeinheit anhand der im Speichermittel hinterlegten Daten eine Beurteilung der Wirtschaftlichkeit ein oder mehrerer Elemente vornimmt, insbesondere anhand der hinterlegten Einsatzzeiten und/oder mit dem Element erzielten Erträge und/oder anfallenden Kosten für das Element, beispielsweise für eine Neuanschaffung und/oder Inbetriebnahme und/oder Wartung des Elementes.

5. Verfahren nach einem der vorhergehenden Ansprüche, **dadurch gekennzeichnet, dass** von dem Überwachungsmittel und/oder der Auswerteeinheit die aktuelle Konfiguration der Arbeitsmaschine bestimmt und gegebenenfalls auf Zulässigkeit überprüft wird.

6. Verfahren nach Anspruch 5, **dadurch gekennzeichnet, dass** in Abhängigkeit der ermittelten Konfiguration betriebsnotwendige rüstungsabhängige Daten, vorzugsweise eine Traglastkurve, durch das Überwachungsmittel und/oder die Auswerteeinheit freigegeben und/oder bereitgestellt werden.

7. Verfahren nach einem der vorhergehenden Ansprüche, **dadurch gekennzeichnet, dass** das Überwachungsmittel und/oder die Auswerteeinheit nach dem Rüsten der Arbeitsmaschine prüft, ob alle gerüsteten Elemente identifizierbar sind und im Falle eines nicht identifizierbaren Elementes eine Information an die Auswerteeinheit übertragen wird und/oder eine manuelle Freigabe des Arbeitsbetriebes durch den Maschinenführer verlangt wird und/oder eine Mitteilung an den Maschinenführer ausgegeben wird.

8. Verfahren nach einem der vorhergehenden Ansprüche, **dadurch gekennzeichnet, dass** eine Identifikation der rüstbaren Elemente mittels an den Elementen vorgehaltenen kodierten Informationen erfolgt, die über Lichtleiter (60) und/oder per berührungsloser Energieübertragung zwischen einzelnen Elementen und/oder zwischen den Elementen und dem Überwachungsmittel übertragen werden.

9. Arbeitsmaschine, insbesondere Kran, besonders bevorzugt Turmkran (10), Mobilkran oder Raupenkran, mit einem Überwachungsmittel und ein oder mehreren identifizierbaren Rüstelementen zur Durchführung des Verfahrens nach einem der vorhergehenden Ansprüche.

10. Arbeitsmaschine nach Anspruch 9, **dadurch gekennzeichnet, dass** ein oder mehrere Lichtleiter (60) zur Übertragung von kodierten Identifizierungsinformationen (50, 51) von wenigstens einem gerüsteten Element an das Überwachungsmittel und/oder zu wenigstens einem weiteren Element vorgesehen sind.

11. Arbeitsmaschinen nach Anspruch 10, **dadurch gekennzeichnet, dass** ein oder mehrere gerüstete Elemente hintereinander montiert sind und die Lichtleiter (60) an den einzelnen Elementen derart befestigt sind, so dass durch die Montage der Elemente eine durchgehende Lichtleiterübertragungsstrecke gebildet ist.

12. Arbeitsmaschine nach Anspruch 11, **dadurch gekennzeichnet, dass** ein berührungsloses Funkübertragungssystem zwischen dem Überwachungsmittel und den gerüsteten Elementen bzw. zwischen einzelnen gerüsteten Elementen vorgesehen ist, beispielsweise auf Grundlage eines RFID-Systems oder eines vergleichbaren Systems.

13. System mit wenigstens einer zentralen Verwaltungseinheit und wenigstens einer Arbeitsmaschine gemäß einem der Ansprüche 9 bis 12 zur Durchführung des Verfahrens gemäß einem der Ansprüche 1 bis 8.

## Claims

1. A method of monitoring at least one work machine, in particular a crane (10), that is assembled from two or more individual elements for use in work, wherein a monitoring means of the work machine unambiguously identifies one or more assembled elements and determines their length of use, wherein the determined length of use of at least one element is transmitted together with identification information (50, 51) to a storage means for preparing a log of use of the element **characterized in that**
- load collectives for at least some of the assembled elements are determined by the monitoring means during the machine deployment and are transmitted to the storage means,
- the at least one monitoring means is a component of a work machine control unit,
- a storage means is located within a central management unit that is connected or can be connected communicationally to one or more monitoring means of different work machines and/or that is attached to the assembled elements itself.

2. The method in accordance with claim 1, **characterized in that** in addition to the length of time, the installed position of the element at the work machine is determined by the monitoring means during the machine deployment and is transmitted to the storage means.

3. The method in accordance with any one of the preceding claims, **characterized in that** an evaluation unit performs a load-induced state analysis of the elements using the data stored in the storage means to assess their future load capability/rated capacity, with the evaluation unit and/or the monitoring means in particular seeing the exact load of an assembled element per operational use with reference to tabular information, ideally with reference to the detected installation position and further information describing the work operation.

4. The method in accordance with any one of the preceding claims, **characterized in that** an evaluation unit performs an assessment of the profitability of one or more elements with reference to the data stored in the storage means, in particular with reference to the stored lengths of use and/or the yields recorded with the element and/or costs incurred for the element, for example for a new purchase and/or for a putting into operation and/or for a servicing of the element.

5. The method in accordance with any one of the preceding claims, **characterized in that** the current configuration of the work machine is determined and optionally checked for reliability by the monitoring means and/or by the evaluation unit.

6. The method in accordance with claim 5, **characterized in that** data required for operation and dependent on the assembly, preferably a payload curve, are released and/or provided by the monitoring means and/or by the evaluation unit in dependence on the determined configuration.

7. The method in accordance with any one of the preceding claims, **characterized in that** the monitoring means and/or the evaluation unit makes a check after the assembly of the work machine whether all the assembled elements are identifiable and in the event of an unidentifiable element, a piece of information is transmitted to the evaluation unit and/or a manual release of the work operation by the machine operator is requested and/or a communication is output to the machine operator.

8. The method in accordance with one of the preceding claims, **characterized in that** an identification of the elements that can be assembled takes place by means of encoded information that is present at the elements and that is transmitted via optical fibers (60) and/or via contactless energy transmission between individual elements and/or between the elements and the monitoring means.

9. A work machine, in particular a crane, particularly preferably a tower crane (10), a mobile crane, or a crawler crane, comprising a monitoring means and one or more identifiable assembly elements for carrying out the method in accordance with one of the preceding claims.

10. The work machine in accordance with claim 9, **characterized in that** one or more optical fibers (60) are provided for transmitting encoded identification information (50,51) of at least one assembled element to the monitoring means and/or to at least one further element.

11. The work machine in accordance with claim 10, **characterized in that** one or more assembled elements are installed behind one another and the optical fibers (60) are fastened to the individual elements such that a continuous optical fiber transmission path is formed by the installation of the elements.

12. The work machine in accordance with claim 12, **characterized in that** a contactless radio transmission system is provided between the monitoring means and the assembled elements or between individual assembled elements, for example on the basis of an RFID system or of a comparable system.

13. A system having at least one central management unit and least one work machine in accordance with one of the claims 9 to 12 for carrying out the method in accordance with one of the claims 1 to 8.

## Revendications

1. Procédé de surveillance d'au moins une machine de travail, notamment d'une grue (10), qui est équipée de deux ou plus de deux éléments individuels pour l'utilisation de travail, au moins un moyen de surveillance d'une machine de travail identifiant de manière univoque plusieurs éléments équipés et déterminant leur temps d'utilisation, les temps d'utilisation déterminés de plusieurs éléments étant transmis conjointement avec des informations d'identification (50, 51) à au moins un moyen de stockage pour créer des historiques d'utilisation des éléments,
**caractérisé en ce que**
- pendant l'utilisation de la machine, des collectifs de charge pour au moins une partie des éléments équipés sont déterminés par l'au moins un moyen de surveillance et transmis à l'au moins un moyen de stockage,
- **en ce que** l'au moins un moyen de surveillance fait partie intégrante d'une commande de machine de travail et
- **en ce qu'**un moyen de stockage se situe à l'intérieur d'une unité de gestion centrale qui est en liaison de communication ou peut être mise en liaison avec un ou plusieurs moyens de surveillance de différentes machines de travail, et/ou **en ce que** des moyens de stockage sont disposés sur les éléments équipés eux-mêmes.

2. Procédé selon la revendication 1, **caractérisé en ce qu'**outre la durée d'utilisation, la position de montage de l'élément sur la machine de travail pendant l'utilisation de la machine est déterminée par le moyen de surveillance et transmise au moyen de stockage.

3. Procédé selon l'une quelconque des revendications précédentes, **caractérisé en ce qu'**une unité d'évaluation effectue, à l'aide des données enregistrées dans le moyen de stockage, une analyse d'état des éléments en fonction de la charge afin d'évaluer leur capacité de charge/capacité portante future, l'unité d'évaluation et/ou le moyen de surveillance extrayant la charge exacte d'un élément équipé par utilisation en fonctionnement, notamment à l'aide d'une information sous forme de tableau, idéalement à l'aide des informations sur la position de montage acquises ainsi que d'autres informations décrivant le fonctionnement de travail.

4. Procédé selon l'une quelconque des revendications précédentes, **caractérisé en ce qu'**une unité d'évaluation effectue une évaluation de la rentabilité d'un ou de plusieurs éléments à l'aide des données enregistrées dans le moyen de stockage, notamment à l'aide des temps d'utilisation enregistrés et/ou des rendements obtenus avec l'élément et/ou des coûts occasionnés pour l'élément, par exemple pour une nouvelle acquisition et/ou une mise en service et/ou une maintenance de l'élément.

5. Procédé selon l'une quelconque des revendications précédentes, **caractérisé en ce que** le moyen de surveillance et/ou l'unité d'évaluation détermine la configuration actuelle de la machine de travail et vérifie le cas échéant sa conformité.

6. Procédé selon la revendication 5, **caractérisé en ce qu'**en fonction de la configuration déterminée, les données nécessaires au fonctionnement dépendantes de l'équipement, de préférence une courbe de charge, sont validées et/ou fournies par le moyen de surveillance et/ou l'unité d'évaluation.

7. Procédé selon l'une quelconque des revendications précédentes, **caractérisé en ce que** le moyen de surveillance et/ou l'unité d'évaluation vérifie, après l'équipement de la machine de travail, si tous les éléments équipés sont identifiables et, dans le cas d'un élément non identifiable, une information est transmise à l'unité d'évaluation et/ou une validation manuelle du fonctionnement de travail est demandée par le conducteur de la machine et/ou un message est envoyé au conducteur de la machine.

8. Procédé selon l'une quelconque des revendications précédentes, **caractérisé en ce qu'**une identification des éléments pouvant être équipés est effectuée au moyen d'informations codées tenues à disposition sur les éléments, qui sont transmises par l'intermédiaire de guides de lumière (60) et/ou par transmission d'énergie sans contact entre les éléments individuels et/ou entre les éléments et le moyen de surveillance.

9. Machine de travail, notamment grue, de manière particulièrement préférée grue à tour (10), grue mobile ou grue sur chenilles, avec un moyen de surveillance et un ou plusieurs éléments d'équipement identifiables pour la mise en œuvre du procédé selon l'une quelconque des revendications précédentes.

10. Machine de travail selon la revendication 9, **caractérisée en ce qu'**un ou plusieurs guides de lumière (60) sont prévus pour transmettre des informations d'identification codées (50, 51) d'au moins un élément équipé au moyen de surveillance et/ou à au moins un autre élément.

11. Machines de travail selon la revendication 10, **caractérisées en ce qu'**un ou plusieurs éléments équipés sont montés les uns derrière les autres et les guides de lumière (60) sont fixés aux éléments individuels de telle sorte que le montage des éléments forme une ligne de transmission par guide de lumière continue.

12. Machine de travail selon la revendication 11, **caractérisée en ce qu'**un système de transmission radio sans contact est prévu entre le moyen de surveillance et les éléments équipés ou entre des éléments équipés individuels, par exemple sur la base d'un système RFID ou d'un système comparable.

13. Système avec au moins une unité de gestion centrale et au moins une machine de travail selon l'une quelconque des revendications 9 à 12 pour la mise en œuvre du procédé selon l'une quelconque des revendications 1 à 8.
